# EUROPÄISCHE PATENTANMELDUNG

(11) **EP 4 434 417 A1**
(43) Veröffentlichungstag der Anmeldung: **25.09.2024**
(21) Anmeldenummer: 23163248.0
(22) Anmeldetag: 21.03.2023
(51) Int. Cl.: A47J 31/52, B25J 11/00

(54) **KAFFEESTATION**

(71) Anmelder: Gössl, Eckhard Michael, 77955 Ettenheim Baden (DE)
(72) Erfinder: Gössl, Eckhard Michael, 77955 Ettenheim Baden (DE)
(74) Vertreter: Limbeck, Achim

(57) **Zusammenfassung**

Die vorliegende Erfindung betrifft eine Kaffeestation, umfassend jedenfalls eine Kaffeemaschine (2) zum Aufbrühen von Kaffee, eine Kaffeebohnenmühle (3) sowie mindestens eine Steuerung. Die erfindungsgemäße Kaffeestation ist dadurch gekennzeichnet, dass sie mindestens einen Roboterarm (1) und mindestens eine Schnittstelle zum Anschluss des Roboterarms (1) der Kaffeestation an ein internes oder externes Netzwerk umfasst, wobei der Roboterarm (1) mindestens eine Einrichtung (11) zum Greifen, Halten und/oder Transportieren und/oder Bewegung eines Behältnisses (B) aufweist, und wobei der netzwerkgesteuerte Roboterarm (1) zur Nachahmung des Prozesses der manuellen Kaffeezubereitung derart ausgebildet und/oder gesteuert ist, dass er (1) diesen Prozess synchron mit der Kaffeemaschine (2) und der Kaffeebohnenmühle (3) durchführt, um Kaffee mit einem personalisierten Geschmack zu brühen.

## Beschreibung

### Technisches Gebiet

Die vorliegende Erfindung betrifft eine Kaffeestation gemäß dem Oberbegriff des Patentanspruchs 1.

### Stand der Technik

Kaffee ist ein im In- und Ausland beliebtes Erfrischungsgetränk, das derzeit größtenteils von Baristas in Cafés von Hand zubereitet wird. Mit der Verbesserung des Lebensstandards der Menschen und dem beschleunigten Lebenstempo steigt die Nachfrage nach Kaffee. An den Eingängen von Cafés bilden sich oft lange Schlangen, zudem steigt die Arbeitsintensität der Baristas, die mehr Personal einstellen müssen, um die Fläche der Cafés weiter auszubauen, was zu einem erheblichen Anstieg der Arbeits- und Standortkosten führt. Darüber hinaus hat jeder Barista unterschiedliche Stile und Techniken. Infolgedessen ist der Geschmack des von verschiedenen Baristas produzierten Kaffees unterschiedlich, was das Café abhängiger von der Technologie des Baristas macht. Mit der Entwicklung der Technologie haben traditionelle Coffeeshops begonnen, Roboter für die Kaffeezubereitung einzusetzen. Die derzeit verwendeten Kaffeeroboter haben jedoch eine halbe oder vollautomatische Funktion, und ihre Roboterarme nehmen nicht am Kaffeezubereitungsprozess teil, sondern können nur Kaffeetassen zu Kunden liefern.

Herkömmliche Kaffeeautomaten verwenden hauptsächlich eine vollautomatische "All-in-One" Kaffeemaschine, die häufig im Heim- oder Bürobereich eingesetzt werden. In diesen Kaffeeautomaten wird Kaffee gemahlen, komprimiert und in derselben Maschine hergestellt, und einige Systeme verwenden sogar gefriergetrockneten oder löslichen Kaffee, um den Kaffee zuzubereiten. Daher können Kaffeeautomaten weder Kaffee wie ein professioneller Barista zubereiten, noch können sie personalisierte Kaffeearomen liefern.

### Darstellung der Erfindung

Der vorliegenden Erfindung liegt die Aufgabe zugrunde, die vorgenannten Nachteile zu beseitigen und eine Kaffeestation zu schaffen, mittels der der herkömmliche, manuelle Prozess der Kaffeezubereitung an einem Kaffeemaschine bzw. an einem Kaffeeautomaten automatisiert wird, wobei die einzelnen Komponenten der Kaffeestation in der Weise zusammen arbeiten sollen, um personalisierte Kaffeearomen gemäß den Kundenbedürfnissen zu kreieren und sicherzustellen, dass die an die Kunden gelieferten Kaffeeprodukte von guter Qualität und Lebensmittelsicherheit sind.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen der erfindungsgemäßen Kaffeestation sind in den abhängigen Unteransprüchen angegeben.

Um die obigen technischen Probleme zu lösen, nimmt die vorliegende Erfindung die folgenden technischen Lösungen an:

Die erfindungsgemäße Kaffeestation umfasst mindestens einen Roboterarm und mindestens eine Schnittstelle zum Anschluss des Roboterarms der Kaffeestation an ein internes oder externes Netzwerk umfasst, wobei der Roboterarm mindestens eine Einrichtung zum Greifen, Halten und/oder Transportieren und/oder Bewegung eines Behältnisses aufweist, und wobei der netzwerkgesteuerte Roboterarm zur Nachahmung des Prozesses der manuellen Kaffeezubereitung derart ausgebildet und/oder gesteuert ist, dass er diesen Prozess synchron mit der Kaffeemaschine und der Kaffeebohnenmühle durchführt, um Kaffee mit einem personalisierten Geschmack zu brühen.

Die Kaffeestation besteht hierzu vorzugsweise aus einem (oder mehreren) elektrisch und/oder pneumatisch ausgelegten mechanischen Arm, einer Kaffeemaschine, einer Kaffeebohnenmühle, vorteilhafterweise einem Behältnis (Becher, Tasse oder dergleichen) Spender, Steuerplatinen, Signalgebern und Kommunikationsstelle (bspw. einem Netzwerkrouter), wobei der Roboterarm, die Kaffeemaschine und die Kaffeebohnenmühle und andere Elemente jeweils mit einer Steuerplatine durch Signale verbunden sind, der den Roboterarm über ein Netzwerk steuern. Der Roboterarm ahmt den Prozess der manuellen Kaffeezubereitung nach und kooperiert mit der Kaffeemaschine und der Kaffeebohnenmühle und weiteren Elementen, um Kaffee mit einem personalisierten Geschmack zuzubereiten.

Das vordere Ende des mechanischen Arms ist vorzugsweise mit einem Behältnishalter (vorzugsweise Klemme) und einer Deckelandrück-Vorrichtung versehen.

Der Roboterarm ist vorzugsweise mit einem Luftkompressor durch einen pneumatischen Schlauch verbunden, wobei der Luftkompressor den Roboterarm steuert, um den pneumatischen Kaffeeprozess durchzuführen zur Herstellung und Gerätereinigung sowie zur Kontrolle des Behältnisses. Das Greifen des Behältnisses mit dem Halter und das Verschließen des Deckels mit der Deckelanpressvorrichtung.

Die Kaffeemaschine kann vorzugsweise eine Schaumdüse, einen Kaffeeseparator-Halteteil und ein Bedienfeld umfassen, wobei eine Schaumdüse an der Kaffeemaschine ausgebildet ist.

Die Seite der Kaffeemaschine dient vorzugsweise zum Milchaufschäumen, das Bedienfeld befindet sich am oberen Ende der Kaffeemaschine und dient der Druckregulierung, Kaffeesorten- und Brühzeitkontrolle. Der Kaffeeabscheider mit dem Kaffeepulver wird eingespannt und fixiert, und das Kaffeepulver wird unter Einwirkung von heißem Wasser verarbeitet, und der Kaffee wird entsprechend der vom Kunden gewählten Sorte hergestellt.

Das Bedienfeld enthält vorzugsweise Schalter für Dampffreigabe und Signalsteuerung, Statusanzeigen.

Vorzugsweise umfasst die Kaffeemaschine ferner eine Tassentemperaturzone, eine Dampfdüse, einen Wasserspülauslass, ein Bodennetz, einen Wassertemperatur- und Druckanzeigebildschirm. Der Tassentemperaturbereich wird oben an der Kaffeemaschine eingestellt, um die Kaffeetasse /Becher warm zu halten Die Dampfdüse befindet sich unter dem Bedienfeld und dient zum Reinigen der Teile an der Kaffeemaschine, die das Aufschäumen der Milch vervollständigen und befindet sich am Kaffeeabscheider neben dem Klemmteil und dient außerdem zur Reinigung des Tabletts am unteren Ende der Kaffeemaschine und zur Wartung der Kaffeemaschine. Das untere Netz ist auf der Oberfläche des Tabletts zum Abstellen der Kaffeetasse / Becher angeordnet. An der Außenseite des unteren Endes der Kaffeemaschine ist die Wassertemperatur- und Wasserdruckanzeige angeordnet, die die Wassertemperatur und den Wasserdruck der Kaffeemaschine anzeigt.

Die Kaffeebohnenmühle umfasst vorzugsweise einen Behälter, eine Behälterabdeckung, ein Wählrad, eine Mahlhaupteinheit, einen vorderen Anzeigebildschirm, einen Pulverauslass und einen Sensor. Der Deckel des Behälters hat eine Verschlussvorrichtung, um zu verhindern, dass das Mahlgut aus dem Behälter fällt, das Auswahlrad ist am Einlass der in das Mahlwerk eintretenden Kaffeebohne angeordnet und wird verwendet, um den Mahlgrad auszuwählen, und der Mahlkörper umfasst eine elektronische Steuervorrichtung und einen Motor mit einem Mahlrad , der vordere Anzeigebildschirm befindet sich am vorderen Ende der Kaffeebohnenmühle, um den Mahlzustand anzuzeigen, und der Pulverauslass befindet sich unterhalb des vorderen Anzeigebildschirms, um Kaffeepulver an den Kaffeeseparator abzugeben, welcher durch den mechanischen Arm im Separator gehalten wird. Der Sensor befindet sich am unteren Ende des Pulverauslasses, und wenn sich der vom mechanischen Arm gehaltene Kaffeeseparator dem Sensor nähert, aktiviert der Sensor das Mahlwerk und gibt das Kaffeepulver an den Kaffeeseparator aus.

Vorzugsweise umfasst die Kaffeestation ferner einen EinwegKaffeetassenspender / Becher, einen Kaffeetassendeckelspender und einen Einstelltisch. Darunter stellt der Einwegkaffeetassenspender eine Einwegkaffeetasse für den Roboterarm bereit, der Kaffeetassendeckelspender stellt einen Kaffeetassendeckel für den Roboterarm bereit und der Einstelltisch wird für den Roboterarm verwendet, um den Boden des Kaffeebechers auszurichten für den Becherdeckel.

Vorzugsweise umfasst die Roboter-Kaffeestation ferner eine Kaffeepulverpresse zum Verdichten des in den Kaffeeseparator geladenen Kaffeepulvers.

Die Roboterkaffeestation umfasst vorzugsweise ferner eine Anrichte.

Vorzugsweise ist die Thekenfläche der Anrichte mit einer konkaven Fläche zum Abstellen von Kaffeetassen versehen.

Vorzugsweise ist die Gehäuseoberfläche der Anrichte ferner mit einer konvexen Oberfläche versehen, die verwendet wird, um den Boden der Milchkanne auf die konvexe Oberfläche zu klopfen, bevor der Milchschaum aus der Milchkanne zum Kaffee gegeben wird.

Vorzugsweise ist der Barschrank mit einem Stauraum unter dem Schrank versehen, in dem die Kaffeebohnenmühle angeordnet ist, um den Milchschäumbehälter zu platzieren, nachdem der automatische Reinigungsvorgang abgeschlossen ist.

Vorzugsweise sind ferner an der Vorderseite des Barschranks mehrere automatische Ausgabelöffnungen vorgesehen, und die automatischen Ausgabelöffnungen sind dem Bestellvorgang zugeordnet.

Die Außenseite der Kaffeestation ist auch mit einem transparenten geschlossenen Gehäuse versehen, um die Roboter-Kaffeestation von der äußeren Umgebung zu isolieren.

Das Material umfasst vorzugsweise Glas oder eine transparente Acrylplatte.

Das Netzwerk ist Ethernet (4G/5G oder entsprechender technischer Stand der Entwicklung), und die Kommunikation zwischen den internen und externen Komponenten wird vorzugsweise über eine PLC (Programmable Logic Controller) - Schnittstelle realisiert, die die künstliche Intelligenz (AI) und die lokale Servicestation verbindet.

Die Kaffeestation hat vorzugsweise einen hohen Intelligenzgrad des mechanischen Arms, der 99,9 % des gesamten Prozesses der Kaffeezubereitung durch den Barista kopieren und wiederholen kann, und kann mit anderen Komponenten in der Kaffeestation koordiniert werden, um personalisierte Kaffeegeschmacksrichtungen zuzubereiten entsprechend den Kundenbedürfnissen und stellen somit sicher, dass die schließlich an die Kunden gelieferten Kaffeeprodukte von guter Qualität und Lebensmittelsicherheit sind, wodurch die Betriebskosten für Kaffee / Getränke effektiv gesenkt und die Hygiene und Sicherheit von Kaffee und Getränkeprodukten erheblich erhöht werden, insbesondere während der Epidemie von Infektionskrankheiten, wie zb.Covid-19, wird die Roboterkaffeestation ein breiteres Anwendungsspektrum haben.

### Kurzbeschreibung der Zeichnungen

Weitere Ziele, Merkmale, Vorteile und Anwendungsmöglichkeiten der erfindungsgemäßen Kaffeestation ergeben sich aus der nachfolgenden Beschreibung eines Ausführungsbeispiels anhand der Zeichnungen.

In den Zeichnungen zeigen
Fig. 1 eine strukturelle Darstellung der Roboter-Kaffeestation der vorliegenden Erfindung;
Fig. 2 ein weiteres strukturelles schematisches Diagramm der Roboter-Kaffeestation der vorliegenden Erfindung;

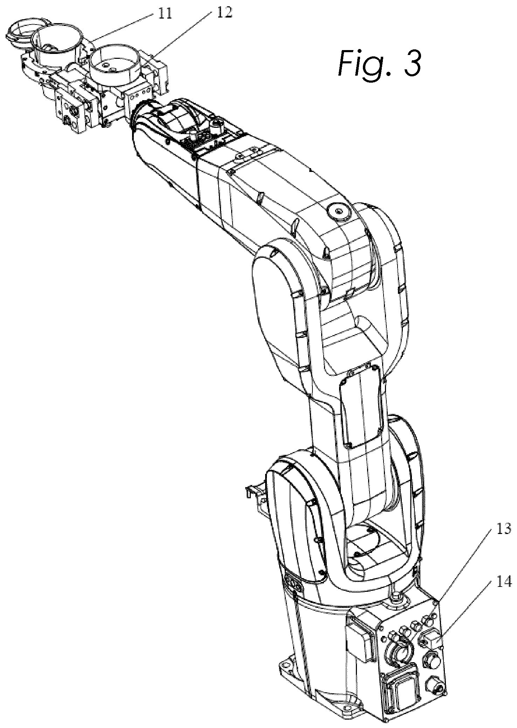

Fig. 3 ein schematisches Strukturdiagramm des Kaffeeroboterarms der vorliegenden Erfindung;
Fig. 4 ein schematisches Strukturdiagramm der Kaffeemaschine der vorliegenden Erfindung;
Fig. 5 ein schematisches Strukturdiagramm der Kaffeebohnenmühle der vorliegenden Erfindung;
Fig. 6 ein schematisches Diagramm des Prozesses der künstlichen Intelligenz ( AI ) des Kaffeeroboterarms der vorliegenden Erfindung;

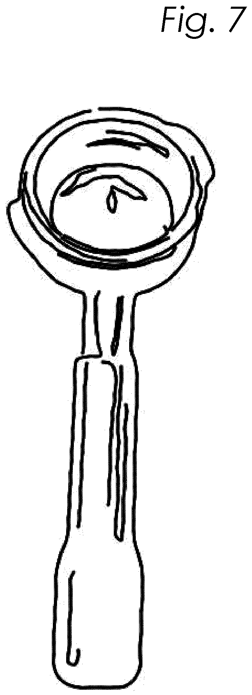

Fig. 7 eine schematische Abbildung des Kaffeeseparators der vorliegenden Erfindung.

### Ausführung der Erfindung

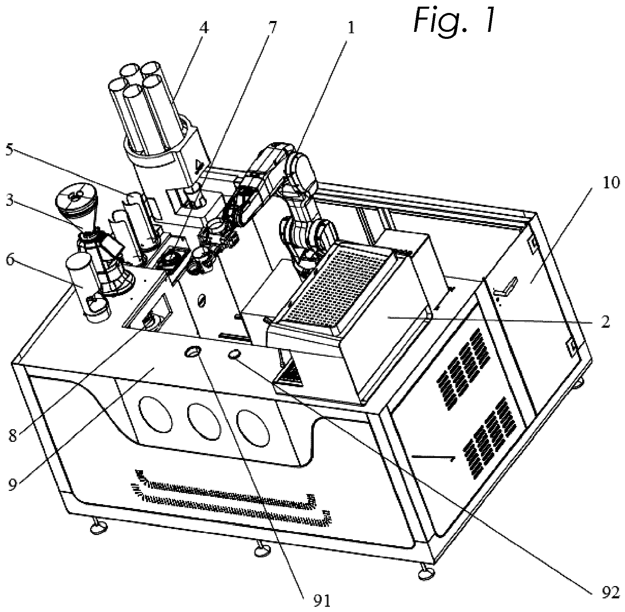

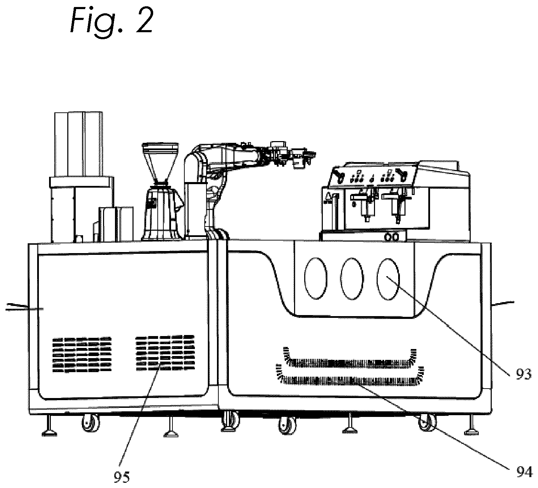

Wie aus den Fign. 1-2 ersichtlich, umfasst die Kaffeestation der vorliegenden Erfindung vorzugsweise einen Roboterarm 1, eine Kaffeemaschine 2, eine Kaffeebohnenmühle 3, Steuerplatinen, einen Netzwerkrouter, einen Roboterarm 1, eine Kaffeemaschine 2 und eine Kaffeebohne Mühle 3. Sie sind jeweils mit den Steuerplatinen verbunden, die den Roboterarm 1 über das Netzwerk steuert. Diese imitieren den Prozess der Kaffeezubereitung von Hand. Roboterarm 1, Kaffeemaschine 2 und Kaffeebohnenmühle 3 arbeiten dabei zusammen, um einen Kaffee mit einem personalisierten Geschmack zu kreieren.

Am Roboterarm 1 am vorderen Ende befindet sich eine Greifvorrichtung 11 und eine Vorrichtung zum Anpressen des Becherverschlusses 12. Der Greifer wird vorzugsweise mit Druckluft betrieben, wird aber auch als elektrische Version verbaut. Bei der Druckluftversion ist das Gehäuseende mit eine Luftkanalanschluss 13 versehen.

Der Greifer 11 in beider Versionen ermöglicht den synchronisierten Ablauf der Kaffeezubereitung und Reinigung der verwendeten Teile, sowie vorzugsweise zum Verschließen der Kaffeebechers 12 nach dessen Füllung.

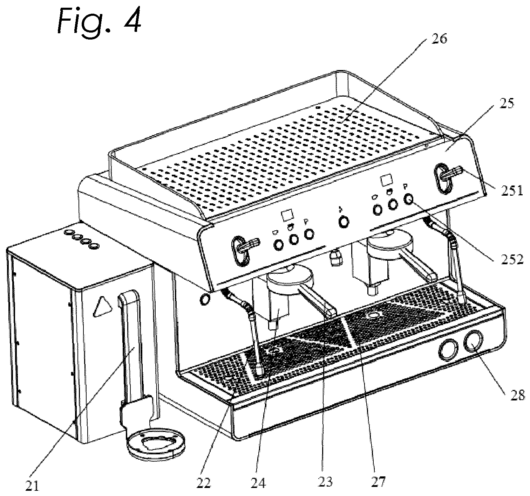

Fig. 4 zeigt Kaffeemaschine 2, Milchaufschäumer 21, Kaffeesieb 23, Bedienungsfeld 25, Im In der aufgezeigten Verbauung diese Kaffeemaschinentypus befindet sich der Milchaufschäumer 21 links an der Kaffeemaschine. Das Bedienungsfeld 25 befindet sich and der Kaffeemaschine (für manuellen Betrieb, wenn gewünscht oder erforderlich) ferner befinden sich hier auch Statusanzeigeelemente. Die Kaffeemaschine ist signalgesteuert.

Der Ablauf der Kaffeezubereitung wird entsprechend der vom Kunde / Betreiber getätigten Auswahl automatisch durch Signalsteuerung ausgeführt. Zweiwegesignal zur Synchronisation and Fehlererkennung.

Das Bedienungsfeld 25 umfasst ferner einen Schalter 251, Maschinenzustandsanzeige 252. Der Schalter 251 kann zur Dampffreigabe betätigt werden, manuell sowohl signalgesteuert.

In der dargestellten Ausführung der Erfindung umfasst die Kaffeemaschine 2 folgende Elemente:

Tassen/ Bechervorwärme-Zone 26, Milchaufschäumer 22 (Dampfauslass), Wasserspülung 24, Bodennetz 27, Wassertemperatur- und Wasserdruckanzeige 28.

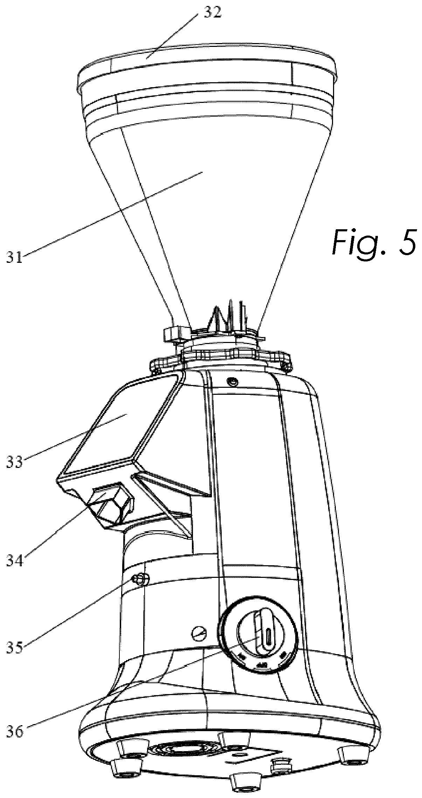

Fig. 5 zeigt eine Kaffeebohnenmühle 3 einschließlich Behälter 31, Behälterverschluss 32, Mahlgradkontrolle und Anzeige 33, Kaffeepulverauslass 34 und Signalsensor 35.

Das Mahlgut wird in den Behälter 31 der Kaffeemühle eingegeben, welcher vorzugsweise eine Sperre am Auslass des Mahlgutes hat. Entsprechend des programmierten Mahlgrades wird der Prozess der Kaffeebohnen zu Kaffeemehl-Zerkleinerung durchgeführt. Dieser Prozess wird vorzugsweise automatisch durch Signalsteuerung durchgeführt. Entsprechend erfolgt die Befüllung der Kaffeesiebes. Ferner befindet sich hier auch ein Schalter 36 zur Maschinensicherung.

Nach der Befüllung wird das Kaffeesieb vorzugsweise mit Hilfe des Roboterarmes zur Kaffeepulverpresse weitergeleitet.

In der hier beschriebenen Ausführung der Erfindung beinhaltet diese einen automatischen signalgesteuerten Einwegtassen / Becher Spender 4, vorzugsweise einen Kaffeetassen / Becherverschluss Spender 5, eine Ablagefläche 7, eine Kaffeepulverpresse 6 sowie andere Elemente. Diese Bauteile dienen zur Bereitstellung und Verschluss des Kaffeebechers.

In der hier gezeigten Ausführung der Erfindung beinhaltet die Roboterkaffeestation vorzugsweise eine Anrichte 9. Auf dieser Anrichte befindet sich vorzugsweise eine nach oben (konvex) gestaltete Fläche 92. Diese dient zum Aufklopfen und Verdichten des Kaffeeschaums,

In der Verbauung der Anrichte 9 befindet sich vorzugsweise eine Vorrichtung zur Reinigung and Trocknung des Milchaufschäumer Gefäßes.

Auf der Frontseite befindet sich eine Zahl von Öffnungen 93 mit programmierter Verschluss Steuerung zur Ausgabe der fertiggestellten Getränke in Abstimmung mit dem Bestellvorgang.

Ferner ist vorzugsweise ein Auffangbehälter für verbrauchtes Kaffeepulver und Abwasser vorgesehen. Die Entwässerung erfolgt systemgesteuert. Das Abwasser der automatischen Systemreinigung wird vorzugsweise auch auf diesem Wege entsorgt.

Die Türe zum Betreten des Inneren der Roboterstation ist vorzugsweise mit einem Sicherungskontakt versehen, welches die Betriebssicherheit erhöht und entsprechende Befehle an die Steuereinrichtung sendet.

Auf der Anrichte 9 befindet sich neben der Kaffeepresse 6 weiter Raum, welcher zum Verbauen weiterer Modularen Komponenten (Ice-Maker, Kühlschrank, Lebensmittel geeigneter Drucker, etc.) ausgebildet ist. Im Unteren Bereich befindet sich Stauraum für des Milchaufschäumer Gefäß, Elektronik and Steuereinheiten, etc.

Anrichte 9: Einwegtassen / Becher Spender 4, Kaffeetassendeckelspender5, Kaffeepulverpresse 6.

Ferner im vorzugsweise verschlossenen Bereich der Anrichte (Machine Body) befinden sich elektronische Geräte und Systembezogene Steuereinheiten sowie eine vorzugsweise zentrale Stromversorgung.

Die Roboter-Kaffeestation der vorliegenden Erfindung ist auch mit Kühlöffnungen, Ventilatoren und Kühlschränken versehen, wobei die Kühlschränke immer eingeschaltet sind solange ein externe Stromversorgung vorhanden ist. Es gibt eine Türe-10 zum Betreten des Innenraumes.

Die Station beinhaltet auch eine Trinkwasserreinigung, sofern dies auf Grund der gegebenen Wasserqualität und Qualitätssicherung notwendig ist.

Im oberen Teil ist die Roboterstation vorzugsweise mit einer Transparenten Verschalung versehen. Dies dient überwiegend zur Betriebssicherheit und Lebensmittel Hygiene.

Das Innere des Gehäuses kann somit desinfiziert und sauber gehalten werden, um die Lebensmittelsicherheit zu gewährleisten und eine externe Manipulation des Kaffeezubereitungsprozesses zu vermeiden. Zudem ist ein direkter Kontakt mit dem sich bewegenden Roboterarm ausgeschlossen, was Sicherheit für Mensch und Maschine bietet. Dank des transparenten Gehäuses kann der gesamte Kaffeezubereitungsprozess von der Öffentlichkeit eingesehen werden. Das Material des Gehäuses umfasst vorzugsweise Glas oder transparente Acrylplatten oder andere Lebensmittel verträgliche Materialien.

Unter dem Gehäuse der Roboter-Kaffeestation der vorliegenden Erfindung befinden sich vorzugsweise eine Radanordnungen, und einstellbare Bremsvorrichtungen, um die Roboterstation in der ausgewählten Position fixiert zu können. Zusätzlich befindet sich unter der Einhausung ein Stromanschluss an das externe Stromnetz sowie ein Wasser zu- und ablauf.

In der spezifischen Ausführungsform der vorliegenden Erfindung befindet sich Internet Schnittstelle im Innern der Roboter-Kaffeestation ( Fig. 1 ). Die Schnittstelle dient zur Kommunikation zwischen der künstlichen Intelligenz (AI) und der lokalen Roboter-Kaffeestation Signal Steuerung. Die Systemsteuerrung und der Bestellprozess kann jedoch auch direkt über ein Eingabefeld ( Ipad etc) OS (Operation System) übergreifend erfolgen. Die vorliegende Erfindung ermöglicht eine fortschrittliche Kommunikation und Datenerfassung über das Internet und / oder künstliche Intelligenzschnittstellen gemäß erreichbaren technischen Standards und gesetzlichen Bestimmungen.

Die Roboterstation, ermöglicht mit Hilfe künstlicher Intelligenz und dem "Internet der Dinge" (IOT) eine kontaktlose (ohne menschliche Körperberührung) Getränke Herstellung und Kundenbedienung.

In einer spezifischen Ausführungsform der vorliegenden Erfindung ist der Prozess der künstlichen Intelligenz (AI ) der Roboterstation angezeigt, einschließlich der folgenden Schritte: Programmstart, Bewegungserkennung durchführen; feststellen, ob es ich um eine Person handelt, wenn es eine Person ist, weiter zum nächsten Schritt der Gesichtserkennung: Wenn es sich nicht um eine Person handelt erfolgt -Programabbruch.

Nach der Gesichtserkennung und/oder wahlweise Benutzerkonten-Erkennung durch APP-Orterkennung wird festgestellt, ob es sich um eine Person mit bereits erstelltem Kundenkonto handelt. Wenn dies der Fall ist, wird die Bestellung angenommen und der Bezahlungsprozess durchgeführt. Sollte es ein Neukunde sein, erfolgt eine Kundenkontoerstellung via Handy.

Es erfolgt ein Scannen des Gesichts und/oder wahlweise Ortserkennung und eine Erfassung persönlicher Informationen (Erstellen des Käuferprofils und Stammdatensatz), um neue Käufe zu ermöglichen und kundenahe Betreuung durchzuführen.

Eine Datenbank vereinfacht danach die Bestellung bei Erkennung des Käufers und seines spezifischen Kaufverhaltens. Dies erfolgt vorzugsweise in Verbindung mit einer bestehenden Bezahlapp. Bei entsprechend erfolgreicher Abwicklung der Bezahlung wird die Käuferstatistik aktualisiert und der Bestellvorgang im System erfolgreich abgeschlossen.

Fehler bei den Kundendaten oder in Bezahl- sowie im Zubereitungsprozess führen vorteilhafterweise zum gesteuerten Abbruch des Vorgangs und entsprechende Systemmeldung.

Zusammenfassend soll die künstliche Intelligenz (AI ) der Roboter-kaffeestation wiederkehrende Kunden erkennen und Bestellungen automatisch aufgeben, die lediglich auf ihre endgültige Bestätigung warten vorzugsweise durch die Bezahl-APP. Wobei die Mensch - Maschine Interaktion variable sein kann. (Eingabe, Sprachgesteuert , Gebärde, etc). Diesee Prozess ist nicht physisch an die Roboterstation gebunden und kann über IOT (internet of Things), 4G, 5G, 6G oder entsprechend nutzbaren Kommunikation Standards systemübergreifend eingesetzt werden. Die Systemprozesse und APP Aktivitäten können innerhalb der Roboter-Kaffeestation sowie auch von externen Standorten wie Servicecentern, Verkaufsbüros usw. überwacht, gewartet und vermarktet werden.

Die in dieser vorliegenden Erfindung der Roboterkaffeestation zeigt als Beispiel den Verlauf der Herstellung eines Milchschaumkaffee. (Cappuccino Style genannt).

### Unter anderen aus folgenden Einzelschritten bestehend:

Der signalgesteuerte Roboterarm entnimmt das Kaffeesieb (Kaffeeseparator) von der Kaffeemaschine und führt diesen programmgemäß zur Kaffeebohnenmühle, welches gesteuert eine Befüllung mit Mahlgut aktiviert. Wenn der Sensor am unteren Ende des Kaffeepulver Auslasses das Signal empfängt, wird die Kaffeebohnenmühle aktiviert und das Kaffeepulver wird an den Kaffeeseparator ausgegeben.

Der gesteuerte Roboterarm bewegt den mit Kaffeepulver gefüllten Kaffeeseparator zur Kaffeepulverpresse, und die Kaffeepulverpresse komprimiert das Kaffeepulver im Kaffeeseparator.

Der gesteuerte Roboterarm fixiert den Kaffeeseparator mit eingefülltem Kaffeepulver mit dem Kaffeeseparator-Halteteil der Kaffeemaschine und verarbeitet das Kaffeepulver unter Einwirkung von heißem Wasser und gesteuertem Druck, nachdem der Kaffeebecher unter dem Auslass des Kaffeeseparators durch den Roboterarm platziert wurde.

Zuvor nimmt der Roboterarm einen Kaffeebecher aus dem vorzugsweise Einweg-Kaffeebecherspender und stellt den Kaffeebecher direkt unter den Kaffeeseparator.

Der Kaffeeseparator füllt den zubereiteten Kaffee in den vorzugsweise Einweg-Kaffeebecher.

Der Roboterarm greift nach einer geeigneten Milchkanne, gießt die Milch ein ( durch gesteuerten Zufluss aus der Milchkühlung) und platziert diese unter den Milchaufschäumer der Kaffeemaschine, um die Milch aufzuschäumen. Die Milch Aufschäumung kann auch wahlweise von einer separaten Station erfolgen.

Der Roboterarm bewegt den Kaffeebecher mit dem eingefüllten Kaffee in die konkave Oberfläche der Anrichte.

Der Roboterarm schüttelt die Milch in der Milchkanne einige Male und gießt sie dann in den Kaffee im Einweg-Kaffeebecher auf der Anrichte.

Der Roboterarm bewegt die aufgeschäumte Milch in der Kanne zur konvexen Oberfläche der Anrichte, setzt den Boden der Milchkanne auf die konvexe Oberfläche und klopft einige Male den Becherboden daran.

(Optional) Wenn die Programmeinstellung es vorsieht: Der Roboterarm nimmt einen Kaffeetassendeckel aus dem Kaffeetassendeckelspender, platziert ihn auf dem Einstelltisch, um ihn auszurichten, und dann presst der Roboterarm den Kaffeetassendeckel auf die Kaffeetasse im System gesteuerten Ablauf. Der Greifer unterstützt dies vorzugsweise durch Anpressen des Deckels.

Nach Abschluss der Bestellung erfolgt ein Reinigungsprozess der verwendeten Komponenten.

Der Roboterarm stellt den Kaffeebecher in die automatische Bestellungsausgabeöffnung, damit der Bestellkunde den individuell angepassten Kaffee abholen kann entsprechend der APP- Steuerung*; *App-Rückmeldung auf Handy, Lichtsignal and Roboterstation, öffnen der Ausgabe.

Das Kaffeesieb (Kaffeeseparator) der vorliegenden Erfindung ist in der Figur gezeigt 7 gezeigt, er dient zum Halten von gemahlenem Kaffee und wird von einem Roboterarm geladen.

Tatsächlich wird im Vorfeld die Programmierung und Koordination der Abläufe der Roboterkaffeestation der vorliegenden Erfindung vorzugsweise von einem Kaffee Barista kontrolliert, um seine professionelle Kaffeezubereitung mit den folgenden Merkmalen und beliebig oft reproduzierbar zu ermöglichen: Optimierung der Menge und Mahlgrad des Kaffeemehls, Wassertemperatur und -druck; Andruckgrad des Kaffeemehls und Einsetzen des Kaffeeseparators in die Kaffeemaschine; Aufschäumtemperatur und Dauer der Milchzubereitung; Einfügen der Milch auf optimierte Weise von Zeit und Winkel zum Kaffee.

Ebenfalls enthalten ist die Möglichkeit, einen Deckel auf den Kaffeebecher anzubringen und den Kaffee mit Deckel berührungslos (without Human Contact) an den Kunden zu liefern, wodurch der Herstellungsprozess and Lieferung der Bestellung vollautomatisch und signalgesteuert ausgeführt wird.

Außerdem folgt hierdurch der Milchaufschäumprozess der Roboter-Kaffeestation der vorliegenden Erfindung auch dem detaillierten manuellen (Kaffeebarista) Prozess, bei dem Milch in die Milchkanne gegossen wird und welche dann zum Milchaufschäumer an der Kaffeemaschine bewegt wird. Nach dem Aufschäumen wird danach der Milchaufschäumer der Kaffeemaschine mit heißem Dampf gereinigt.

Die unbearbeitete Milch wird in einem separaten Milchbehälter gelagert, der vorzugsweise über einen Sensor zur berührungslosen Messung der Verfügbarkeit und Menge der im Kühlschrank gelagerten Milch verfügt. Ein Milchschlauch-Reinigungssystem, reinigt das Milchabgabesystem in voreingestellten Zeitintervallen automatisch.

Sowohl der Milchauslass als auch der Kaffeeseparator und weitere in der Zubereitung verwendeten Teile, werden signalgesteuert mit Wasser gewaschen und vorzugsweise mit Druckluft getrocknet, um die Sauberkeit und Lebensmittelsicherheit der Anlage sowie des Getränkes zu gewährleisten.

Für die Gestaltung der dem Kaffee hinzugefügten oberen Schicht Milchschaum kann die Bewegung des Roboterarms vollständig angepasst werden. So kann man dem Top-Design des Milchschaumes grafische Elemente hinzu fügen.

Dieser Vorgang kann auch mit einem zusätzlichen Lebensmitteldrucker durchgeführt werden, der dem Milchschaum fast beliebige Grafiken hinzufügen kann. In diesem Schritt wird im Unterschied zu einer herkömmlichen Kaffeemaschine der Milchschaum vor der Zugabe des Kaffees speziell aufbereitet. Während des Schäumungsvorganges werden die überschüssigen Luftblasen im Schaum freigesetzt, wodurch der Schaum stabiler und glatter wird. Der Roboterarm kann die Kaffeetasse zur entsprechenden Druckstation bewegen, um einen Take-Away-Service und / oder ein externes Etikett für den zu verwendenden Kaffee hinzuzufügen.

Alle Bewegungen des Roboterarms werden durch den Empfang von Signalen von zugehörigen Komponenten wie Steuerplatinen und Kommunikations Netzwerken koordiniert. Der überwiegende Anteil der Prozesse kann vorzugsweise individuell eingestellt, programmiert, kontrolliert und gesteuert werden.

Der Kaffeegeschmack kann je nach verwendeter Kaffeebohnensorte angepasst werden, die Partikelgröße und -menge kann beim Mahlen der Kaffeebohnen verändert werden. Darüber hinaus kann es an regionale Unterschiede im Geschmack der Kunden angepasst werden.

Untersuchungen von Baristas haben ergeben, dass die Größe einer Stadt einen starken Einfluss auf die Kaffeepräferenzen hat. Tier-1-Städte bevorzugen milde Kaffeearomen als mittelstarke Geschmack, während Tier-2-Städte amerikanische Aromen bevorzugen, die hauptsächlich von Markenkaffeeketten eingeführt werden. Drittrangige Städte sind offener für einen gesunden und bequemen Kaffee. Eines ist für all diese Städte gleich, das heißt, die Qualität muss einen hohen Standard haben und konstant sein. Die automatisierte Roboter-Kaffeestation der vorliegenden Erfindung tut dies durch Eliminieren des Elements menschlicher Fehler und durch einen vollständig angepassten Prozess. Hinzu kommen Kontrollsysteme für die Lieferkette.

Der bedeutendste Unterschied im technischen Design der vorliegenden Erfindung besteht darin, dass alle Komponenten modular aufgebaut sind, wodurch es möglich wird, Komponenten und zugehörige Prozesse zu warten, hinzuzufügen, zu ersetzen oder zu aktualisieren, ohne dass andere Komponenten ersetzt werden müssen.

Kommunikationssignale verbinden Komponenten und Baugruppen, die im Produktherstellungsprozess des Getränkes vorzugsweise unabhängig voneinander jedoch synchron ablaufen.

Die externe Kommunikation mit dem Kunden, Datenzentren und Serviceteam erfolgt vorzugsweise über kabellose Kommunikationssysteme, Internet, Handy, APP.

Die oben erwähnten Ausführungsformen sind relativ spezifisch und detailliert, sollten aber nicht so ausgelegt werden, dass sie den Umfang des Patents der vorliegenden Erfindung einschränken. Es sollte darauf hingewiesen werden, dass für den Durchschnittsfachmann, ohne vom Konzept der vorliegenden Erfindung abzuweichen, auch mehrere Modifikationen und Verbesserungen vorgenommen werden können, die alle zum Schutzumfang der vorliegenden Erfindung gehören. Daher sollte der Schutzbereich des Patents der vorliegenden Erfindung Gegenstand der beigefügten Ansprüche umfassen aber nicht eingrenzen.

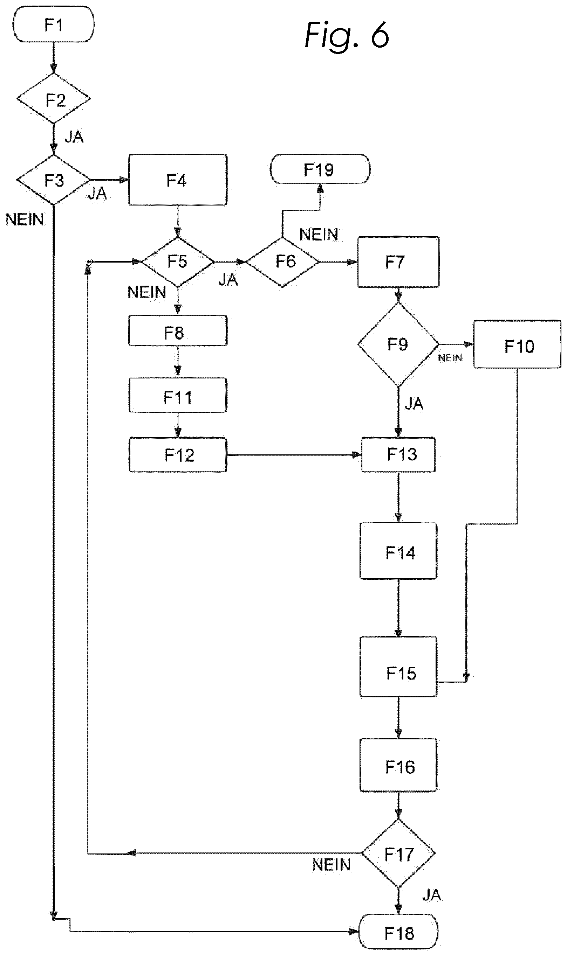

### Liste der Bezugsziffern zu Fig. 6

- F1: Start
- F2: Bewegungsmeldung / APP Ortsmeldung (Location)
- F3: Mensch
- F4: Gesichtserkennung / APP Benutzererkennung
- F5: Kundenkonto
- F6: Handy Login / APP Login
- F7: Kundendatenabfrage
- F8: Kundenkonto Erstellung / Stammdaten
- F9: Datenabfrage und Vergleich Stammdaten, Übereinstimmung der Daten
- F10: Neue Daten / Stammdaten anlegen, Synchronisieren mit Konto
- F11: Gesichts Erkennung erfassen, Ortsdaten erfassen
- F12: Personen Stammdaten anlegen
- F13: Kaufverhalten erfassen
- F14: Bestellungserfassung und Bearbeitung in Bezahl-APP
- F15: Positive APP Rückmeldung, Datenbank Aktualisierung
- F16: Ausführung / Lieferung nach BezahlAPP Vorgang Positiv Bestätigung
- F17: Vorgang erfolgreich
- F18: Ende / Auslieferung
- F19: Ende Abbruch

## Patentansprüche

1. Kaffeestation, umfassend jedenfalls eine Kaffeemaschine (2) zum Aufbrühen von Kaffee, eine Kaffeebohnenmühle (3) sowie mindestens eine Steuerung,
**dadurch gekennzeichnet, dass**
die Kaffeestation mindestens einen Roboterarm (1) und mindestens eine Schnittstelle zum Anschluss des Roboterarms (1) der Kaffeestation an ein internes oder externes Netzwerk umfasst, wobei der Roboterarm (1) mindestens eine Einrichtung (11) zum Greifen, Halten und/oder Transportieren und/oder Bewegung eines Behältnisses (B) aufweist, und wobei der netzwerkgesteuerte Roboterarm (1) zur Nachahmung des Prozesses der manuellen Kaffeezubereitung derart ausgebildet und/oder gesteuert ist, dass er (1) diesen Prozess synchron mit der Kaffeemaschine (2) und der Kaffeebohnenmühle (3) durchführt, um Kaffee mit einem personalisierten Geschmack zu brühen.

2. Kaffeestation nach Anspruch 1,
**dadurch gekennzeichnet, dass**
am vorderen Ende des Roboterarms (1) ein Behältnisgreifer und/oder -halter (11) und/oder eine Behältnisdeckel-Andrückvorrichtung (12) vorgesehen ist.

3. Kaffeestation nach Anspruch 1 oder 2,
**dadurch gekennzeichnet, dass**
der Roboterarm (1) mit einem Luftkompressor durch eine pneumatische, flexible Leitung verbunden ist und der Luftkompressor den Roboterarm (1) funktional unterstützt, um die pneumatischen Prozesse für die Kaffeezubereitung und/oder Gerätereinigung und/oder das Halten des Behältnisses (B) auszuführen.

4. Kaffeestation nach einem der vorangegangenen Ansprüche,
**dadurch gekennzeichnet, dass**
die Kaffeemaschine (2) eine Schaumdüse (21), ein Kaffeeseparator-Halteteil (23) und ein Bedienfeld (25) umfasst, wobei die Schaumdüse (21) vorzugsweise an einer Seite der Kaffeemaschine (2) zum Milchaufschäumen angeordnet ist und sich das Bedienfeld (25) vorzugsweise am oberen Ende der Kaffeemaschine (2) befindet, welches vorteilhafterweise der Druckregulierung, Kaffeesorten- und Brühzeitkontrolle dient, wobei vorzugsweise ein Klemmteil des Kaffeeseparators unterhalb der Bedienblende angeordnet ist und zum Einspannen und Fixieren des mit Kaffeepulver gefüllten Kaffeeseparators dient, wobei das Kaffeepulver vorzugsweise unter Einwirkung von heißem Wasser verarbeitet und der Kaffee entsprechend der vom Kunden gewählten Sorte zubereitet wird.

5. Kaffeestation nach einem der vorangegangenen Ansprüche,
**dadurch gekennzeichnet, dass**
die Kaffeemaschine (2) ferner einen Tassentemperaturbereich, eine Dampfdüse (22), einen Wasserspülauslass (24), ein Bodennetz (27), einen Wassertemperatur- und Druckanzeigebildschirm (28) umfasst, wobei die Kaffeemaschine (2) vorzugsweise ausgebildet ist, das Behältnis (B) warm halten, wobei sich die Dampfdüse (22) vorzugsweise unter dem Bedienfeld (25) befindet, mit dem die Teile der Kaffeemaschine (2) gereinigt werden, die das Aufschäumen der Milch vervollständigen, und sich daneben vorzugsweise der Wasserspülauslass des Kaffeeseparator-Halteteils befindet, das zur Reinigung eines Tabletts am unteren Ende der Kaffeemaschine (2) und zur Wartung der Kaffeemaschine dient, wobei das untere Netz auf der Oberfläche des Tabletts für die Ablage von Behältnis angeordnet ist, wobei die Wassertemperatur und Druckanzeige auf der Außenseite des unteren Endes der Kaffeemaschine angeordnet ist und verwendet wird, um die Wassertemperatur und den Druck der Kaffeemaschine anzuzeigen.

6. Kaffeestation nach Anspruch 5,
**dadurch gekennzeichnet, dass**
das Bedienfeld (25) einen Schalter (251) und eine Statusanzeige (252) umfasst und der Schalter (251) zur Dampfabgabe durch eine Steuerung verwendet wird.

7. Kaffeestation nach einem der vorangegangenen Ansprüche,
**dadurch gekennzeichnet, dass**
sie derart ausgebildet ist, dass der Milchschaum verarbeitet wird, bevor er dem Kaffee zugesetzt wird.

8. Kaffeestation nach einem der vorangegangenen Ansprüche,
**dadurch gekennzeichnet, dass**
die Kaffeebohnenmühle (3) einen Behälter, eine Behälterabdeckung, ein Auswahlrad, einen Mahlkörper, einen vorderen Anzeigebildschirm, einen Pulverauslass und einen Sensor umfasst und der Behälter am oberen Ende der Kaffeebohnenmühle angeordnet ist, der zum Einlegen gerösteter Kaffeebohnen verwendet wird, wobei der Behälterdeckel eine Schließvorrichtung umfasst, um zu verhindern, dass die Kaffeebohnen, die nicht in die Mühle gelangen, aus dem Behälter fallen, und das Auswahlrad am Eingang der Kaffeebohnen in die Mühle zum Auswählen des Mahlgrads angeordnet ist und die Mahlhaupteinheit eine elektronische Steuervorrichtung und einen Motor mit einer Mahlscheibe umfasst, und der vordere Anzeigebildschirm am vorderen Ende der Kaffeebohnenmühle zur Anzeige ausgebildet ist.

9. Kaffeestation nach einem der vorangegangenen Ansprüche,
**dadurch gekennzeichnet, dass**
sie einen Behältnisspender und/oder einen Kaffeepulverpresse umfasst.

10. Kaffeestation nach einem der vorangegangenen Ansprüche,
**dadurch gekennzeichnet, dass**
sie ausgebildet ist, dass das in den Kaffeeseparator geladene Kaffeepulver verdichtet wird.

11. Kaffeestation nach einem der vorangegangenen Ansprüche,
**dadurch gekennzeichnet, dass**
sie eine Thekenfläche, eine Theke mit einer Thekenfläche und/oder eine Anrichte umfasst.

12. Kaffeestation nach einem der vorangegangenen Ansprüche,
**dadurch gekennzeichnet, dass**
an der Vorderseite der Anrichte mehrere automatische Steueröffnungen vorgesehen sind, und die automatischen Steueröffnungen dem Bestellvorgang zugeordnet sind.

13. Kaffeestation nach einem der vorangegangenen Ansprüche,
**dadurch gekennzeichnet, dass**
ein transparentes, geschlossenes Gehäuse außerhalb der Kaffeestation vorgesehen ist, um die Kaffeestation von der äußeren Umgebung zu isolieren, und das Material des Gehäuses eine transparente Glas- oder Acrylplatte umfasst.

14. Kaffeestation nach einem der vorangegangenen Ansprüche,
**dadurch gekennzeichnet, dass**
die Kommunikation zwischen den internen und den externen Komponenten der Kaffeestation über die Netzwerk-Schnittstelle realisiert wird, wobei vorzugsweise eine künstliche Intelligenz (AI) die lokale Servicestation verbindet.
